# EUROPEAN PATENT APPLICATION

(11) **EP 1 909 509 A2**
(43) Date of publication of application: **09.04.2008**
(21) Application number: 07018807.3
(22) Date of filing: 25.09.2007
(51) Int. Cl.: H04N 13/00

(54) **Display device, image processing method, and electronic apparatus**

(30) Priority: 29.09.2006 JP 2006268984; 11.01.2007 JP 2007003235
(71) Applicant: Seiko Epson Corporation, Tokyo 160-0811 (JP)
(72) Inventor: Hamagishi, Goro, Suwa-shi Nagano-ken 392-8502 (JP); Sugiyama, Nobuo, Suwa-shi Nagano-ken 392-8502 (JP)
(74) Representative: HOFFMANN EITLE

(57) **Abstract**

A display device is provided. The display device includes pixels including a plurality of subpixels of different colors; a display unit in which the pixels are arranged in horizontal and vertical directions; an image data combining circuit that combines image data for a first image to be displayed on the display unit and image data for a second image to be displayed on the display unit with each other; and an image separation member that spatially separates the first image and the second image displayed on the display unit from each other, in which the first image includes, as a display pixel which is a minimum display unit of an image, one or more subpixels selected from the plurality of subpixels included in one pixel, and the second image includes, as a display pixel which is a minimum display unit of an image, one or more subpixels other than the one or more subpixels selected for the first image among the plurality of subpixels included in the one pixel.

## Description

### BACKGROUND

### 1. Technical Field

The present invention relates to a display device, an image processing method, and an electronic apparatus, in which a stereoscopic image or a multi-viewpoint image can be observed without using special glasses.

### 2. Related Art

As a method for displaying a stereoscopic image without requiring special glasses, a parallax barrier method and a lenticular method are known. According to the methods, an image for the left eye (left-eye image) and an image for the right eye (right-eye image) using the parallax effect between the left and right eyes are alternately displayed on a screen in vertical stripes. The displayed images are separated using a parallax barrier or a lenticular lens and are then guided to the left and right eyes of an observer, thereby displaying a stereoscopic image (such a method will be referred to as a "stripe barrier method").

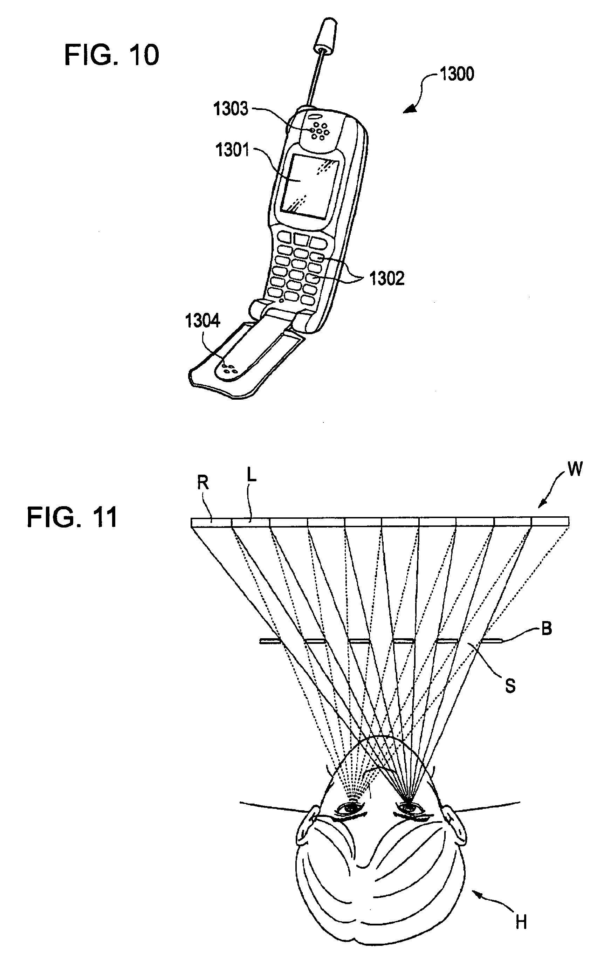

Fig. 11 shows a schematic construction of a display device using the parallax barrier. On the screen W, the left-eye image L and the right-eye image R are alternately displayed on a column-by-column basis. Between the screen W and the observer H, a parallax barrier B is disposed which is one example of an image separation member for spatially separating the left-eye image L and the right-eye image R from each other. The parallax barrier B is a light blocking film having a plurality of apertures corresponding to the left-eye image L and the right-eye image R. The parallax barrier B has a function of preventing the left-eye image L from entering the right eye of the observer H and preventing the right-eye image R from entering the left eye of the observer H. The parallax barrier B is provided with slits S arranged as vertical stripes. With the slits S, the left-eye image L can be guided to the left eye of the observer H, and the right-eye image R can be guided to the right eye of the observer H.

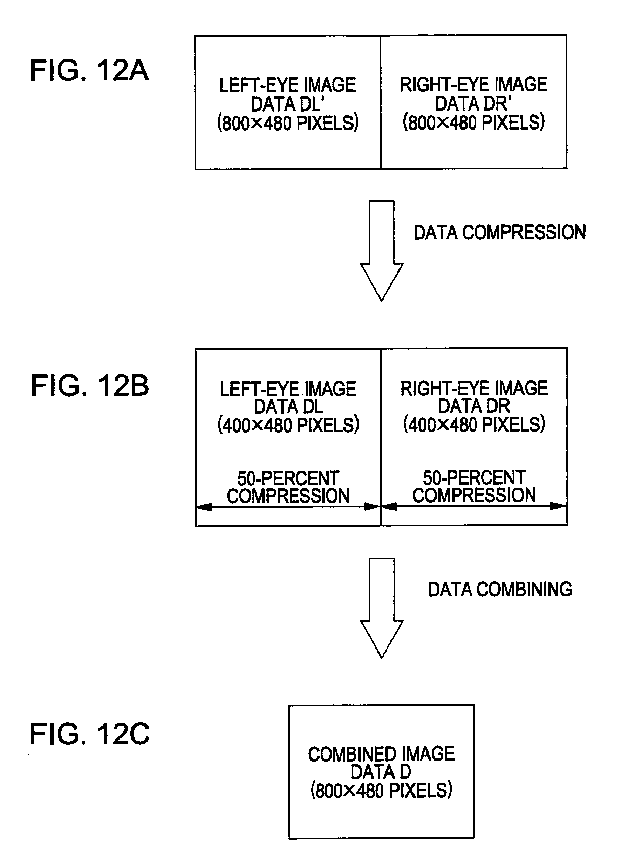

Fig. 12 is an explanatory diagram showing a method for combining the left-eye image L and the right-eye image R on one screen W. In the drawing, (a) shows image data DL' for the left eye (left-eye image data) and image data DR' for the right eye (right-eye image data) that are supplied to the display device; (b) shows left-eye image data DL and right-eye image data DR obtained by compressing the left-and right-eye image data DL' and DR' in the horizontal direction; and (c) shows combined image data D obtained by alternately rearranging the image data DR and DL on an column-by-column basis and combining the rearranged image data with each other.

As shown in Fig. 12, since two images L and R, one for the left eye and one for the right eye, are displayed on the screen W, the horizontal resolution of each of the images L and R is 1/2 of the original one. The left-eye image data DL' and the right-eye image data DR' supplied to the display device are filtered out by an image data combining circuit on a pixel-by-pixel basis and are processed to the left-eye image data DL and the right-eye image data DR in which the horizontal resolution is reduced by 50 percent. The image data DL and DR are alternately rearranged on a subpixel-by-subpixel basis and combined with each other, thereby producing the combined data D (see JP-A-2000-244946).

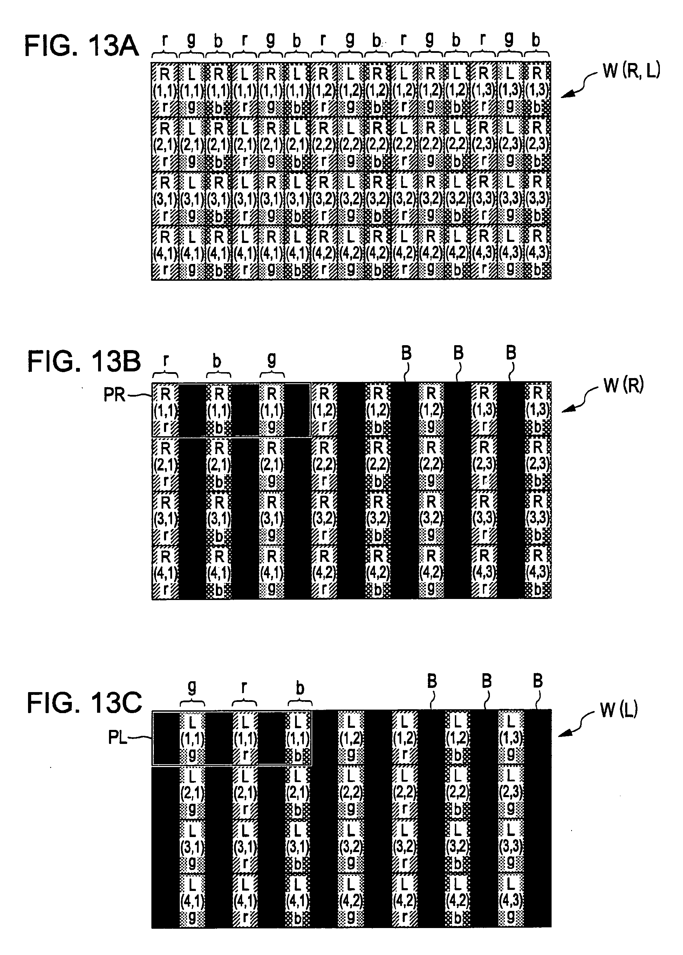

Figs. 13A to 13C show plan views of a part of an image of the combined data D displayed on the screen W. In the drawing, Fig. 13(A) shows a combined image of the left-eye image L and the right-eye image R; Fig. 13(B) shows the right-eye image R as observed through the parallax barrier B; and Fig. 13(C) shows the left-eye image L as observed through the parallax barrier B. In the drawing, the characters "r," "g" and "b" respectively represent subpixels associated with color filters of red, green, and blue.

As shown in Fig. 13A, the subpixels for displaying the right-eye image R and the subpixels for displaying the left-eye image L are alternately arranged in the horizontal direction on a subpixel-by-subpixel basis. As viewed from the vertical direction, a plurality of subpixels for displaying the right-eye image R and a plurality of subpixels for displaying the left-eye image L are alternately arranged on a column-by-column basis. That is, the plurality of subpixels for displaying images R and L are arranged in the arrangement direction of the color filters (in the vertical direction) in stripes. The right-eye image R and the left-eye image L shown in Fig. 11 each represents an image formed by the subpixels, corresponding to one column, arranged in the vertical direction.

In Fig. 13B, a set of three subpixels represented by the same coordinates (n, k) constitutes one display pixel PR for the right-eye image R. That is, the display pixel PR is composed of three (red, blue, and green) subpixels arranged on a subpixel-by-subpixel basis. The display pixel PR is a minimum display unit for displaying a post-combined right-eye image R, and is different from the pixel (panel pixel) constituting the screen W. That is, the display pixel PR is different from the pixel composed of a set of three (red, green, and blue) subpixels that are arranged adjacently in the horizontal direction. On the screen W, a plurality of display pixels PR for the right eye (right-eye display pixel) are arranged in the horizontal and vertical directions. The plurality of right-eye display pixels PR form the whole right-eye image R.

In Fig. 13C, a set of three subpixels represented by the same coordinates (n, k) constitutes one display pixel PR for the left-eye image L. That is, the display pixel PL is composed of three subpixels of red, blue, and green arranged on a subpixel-by-subpixel basis. The display pixel PL is a minimum display unit for displaying a post-combined left-eye image L, and is different from the pixel (panel pixel) constituting the screen W. That is, the display pixel PL is different from a set of three (red, green, and blue) subpixels that are arranged adjacently in the horizontal direction. On the screen W, a plurality of display pixels PL for the left eye (left-eye display pixel) are arranged in the horizontal and vertical directions. The plurality of left-eye display pixels PL form the whole left-eye image L.

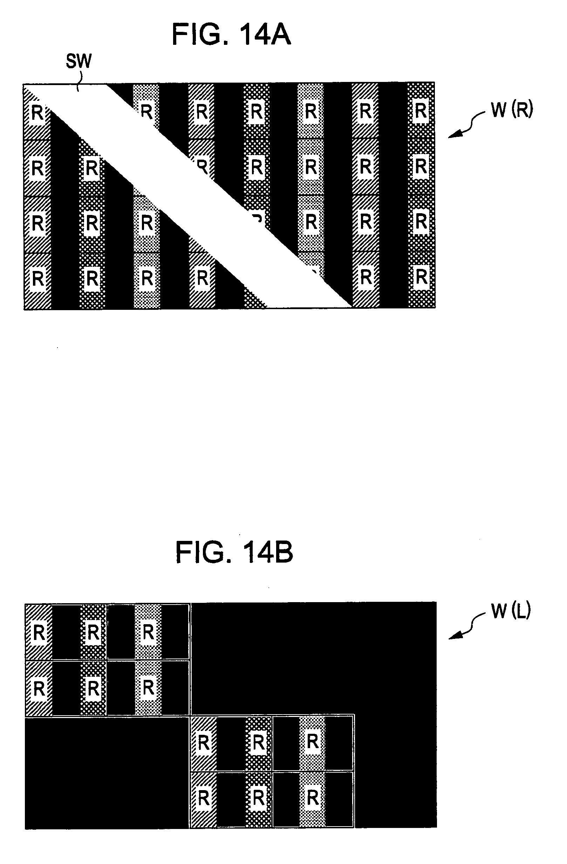

However, since the display pixels PR and PL are composed of three subpixels alternately arranged on a subpixel-by-subpixel basis, the size of the display pixels PR and PL is doubled in the horizontal direction compared with that required for displaying a two-dimensional image (that is, the number of display pixels used is doubled). Thus, it is difficult to obtain sufficient reproducibility at the time of displaying a fine image. For example, Figs. 14A and 14B show the case where a white bright line SW is displayed on the screen W. As shown in Fig. 14A, when the bright line SW is displayed on the right-eye image R, it is necessary to illuminate the display pixels PR overlapped by the bright line SW (Fig. 14B). In this case, since the size of the display pixels PR is doubled in the horizontal direction compared with that required for displaying the two-dimensional image, the width of the bright line SW is also increased in the horizontal direction. Therefore, the shape of the bright line SW is greatly deformed from the original one.

As means for solving the problem, an oblique barrier method (step barrier method) can be contemplated in which the right-eye image R and the left-eye image L are alternately arranged in both the horizontal and vertical directions, and the parallax barrier B is obliquely arranged in the horizontal direction to correspond to the images R and L. In the step barrier method, since an aspect ratio of the display pixel approaches 1:1, a resulting image is not greatly deformed in the horizontal direction unlike the stripe barrier method. Thus, it is possible to obtain a smooth image as a whole.

Although the above method can improve the aspect ratio of the display pixel, improvement in image quality is still limited. Even in the step barrier method, since the size of one display pixel is twice that of the original pixel (panel pixel), it is difficult to obtain a sufficient resolution at the time of displaying a fine image. Such a problem is inevitable in a known image processing method in which image data for the right-eye and left-eye images are filtered out on a pixel-by-pixel basis. Solving the problem is essential for realizing the improvement in quality of the stereoscopic image.

### SUMMARY

An advantage of some aspects of the invention is that it provides a display device and an image processing method, capable of displaying a stereoscopic image or a multi-viewpoint image having a high resolution. Another advantage of some aspects of the invention is that it provides an electronic apparatus having such a display device, capable of displaying a stereoscopic image or a multi-viewpoint image having a clear and smooth border.

According to an aspect of the invention, there is provided a display device including pixels including a plurality of subpixels of different colors; a display unit in which the pixels are arranged in horizontal and vertical directions; an image data combining circuit that combines image data for a first image to be displayed on the display unit and image data for a second image to be displayed on the display unit with each other; and an image separation member that spatially separates the first image and the second image displayed on the display unit from each other, in which the first image includes, as a display pixel which is a minimum display unit of an image, one or more subpixels selected from the plurality of subpixels included in one pixel, and the second image includes, as a display pixel which is a minimum display unit of an image, one or more subpixels other than the one or more subpixels selected for the first image among the plurality of subpixels included in the one pixel. According to such a configuration, since the image data for the first and second images are compressed by being filtered out on a subpixel-by-subpixel basis, the size of the display pixels for displaying a combined image of the first and second images becomes equal to that of the pixels (panel pixels) required for displaying the two-dimensional image. Thus, it is possible to display an image having a high resolution.

The image displayed on the display unit is not limited to two images (first and second images), but three or more images including a third image may be displayed on the display unit. In this case, the third image includes, as a display pixel which is a minimum display unit of an image, one or more subpixels other than the one or more subpixels selected for the first and second images among the plurality of subpixels included in the one pixel. The same statements can be similarly applied to the case where four or more images including a fourth image are displayed on the display unit. In the case of displaying four or more images on the display unit, since three or more subpixels are filtered out from one pixel, a panel (display unit) is not applicable in which one pixel is composed of three subpixels. In this case, a special panel is required in which one pixel is composed of four or more subpixels. In the case of displaying an image in accordance with the above aspect, it is desirable that three or less images be displayed on the display unit.

In the above aspect, it is desirable that colors of adjacent subpixels, selected as the display pixel, in one image be different from each other. According to such a configuration, since the displayed colors are different from each other between adjacent display pixels, color compensation is realized between the adjacent display pixels. Thus, it is possible to obtain accurate color reproducibility as a whole.

In the above aspect, it is desirable that in one pixel, a total of the number of subpixels selected as the display pixel for the first image and the number of subpixels selected as the display pixel for the second image be equal to the number of subpixels included in the one pixel. According to such a configuration, the amount of color information that is filtered out from the first and second images is suppressed as much as possible. Thus, it is possible to display an image with high color reproducibility.

In the above aspect, it is desirable that the image data combining circuit include a read-in control circuit that selectively reads, into a memory, image data of the subpixels selected as the display pixel of the first image and image data of the subpixels selected as the display pixel of the second image from pre-combined image data for the first image supplied from an external source and pre-combined image data for the second image supplied from the external source, respectively; and a read-out control circuit that outputs the image data read into the memory to a corresponding one of the subpixels in one pixel via image signal lines. According to such a configuration, since the image data for the first and second images are supplied to the display unit after being combined, it is not necessary to modify the structure of the display unit. Thus, a display unit suitable for displaying the two-dimensional image can be used as the display unit of the invention without modification.

In the above aspect, it is desirable that the image data combining circuit include a selection circuit that selects image data of the subpixels selected as the display pixel of the first image and image data of the subpixels selected as the display pixel of the second image from pre-combined image data for the first image supplied from an external source and pre-combined image data for the second image supplied from the external source, respectively, and outputs the image data for the first and second images to a corresponding one of the subpixels. According to such a configuration, since the image data can be combined without using a memory, it is possible to provide a display device at low cost.

In the above aspect, it is desirable that the selection circuit include a plurality of selection switching elements arranged in a horizontal direction, that the plurality of selection switching elements be connected to the plurality of subpixels arranged in horizontal and vertical directions, and that each selection switching element be connected to two image signal lines so that the pre-combined image data for the first and second images are supplied to a corresponding subpixel, that is electrically connected to the selection switching element, via a corresponding one of the image signal lines. According to such a configuration, it is possible to select the image data for the first and second images and to supply them to a corresponding one of the subpixels in a simple manner.

In the above aspect, it is desirable that the selection switching elements corresponding to the subpixels of a common color select the image data so that the image data of adjacent subpixels represent different images. According to such a configuration, it is possible to make the adjacent display pixels display different colors. For this reason, color compensation is realized between the adjacent display pixels. Thus, it is possible to obtain relatively accurate color reproducibility.

In the above aspect, it is desirable that the subpixels selected as the display pixel for the first image and the subpixels selected as the display pixel for the second image be alternately arranged in at least one of the horizontal and vertical directions. According to such a configuration, color compensation is realized between the adjacent display pixels in the horizontal or vertical direction.

In the above aspect, it is desirable that the subpixels selected as the display pixel for the first image and the subpixels selected as the display pixel for the second image be alternately arranged in both the horizontal and vertical directions. According to such a configuration, color compensation can be realized between the adjacent display pixels in both the horizontal and vertical directions. Thus, it is possible to obtain higher color reproducibility.

In the above aspect, it is desirable that the first image be an image for the right eye, and that the second image be an image for the left eye. In the above aspect, it is desirable that the first image be a first-viewpoint image observed from a first viewpoint, and that the second image be a second-viewpoint image observed from a second viewpoint. According to such a configuration, it is possible to provide a display device capable of displaying a stereoscopic image or a multi-viewpoint image having a high resolution.

According to another aspect of the invention, there is provided an image processing method in which a first image and a second image are combined with each other and displayed on one screen, the method including constructing, as a display pixel which is a minimum display unit of the first image, one or more subpixels selected from a plurality of subpixels included in one pixel; and constructing, as a display pixel which is a minimum display unit of the second image, one or more subpixels other than the one or more subpixels selected for the first image among the plurality of subpixels included in the one pixel. According to such a method, since the image data for the first and second images are compressed by being filtered out on a subpixel-by-subpixel basis, the size of the display pixels for displaying a combined image of the first and second images becomes equal to that of the pixels (panel pixels) required for displaying the two-dimensional image. Thus, it is possible to display an image having a high resolution.

According to a further aspect of the invention, there is provided an electronic apparatus having the display device of the above aspect. According to such a configuration, it is possible to provide an electronic apparatus capable of displaying a stereoscopic image or a multi-viewpoint image having a clear and smooth border.

### BRIEF DESCRIPTION OF THE DRAWINGS

The invention will be described with reference to the accompanying drawings, wherein like numbers reference like elements.

Fig. 1 is a schematic diagram showing the construction of a display device in accordance with a first embodiment of the invention.

Fig. 2 is a block diagram showing the entire construction of the display device.

Fig. 3 is a block diagram showing the electrical construction of a display unit and a peripheral driving circuit of the display device.

Fig. 4 is a diagram for explaining an image processing method of the display device.

Figs. 5A to 5C are plan views of a combined image combined using the image processing method.

Figs. 6A and 6B are diagrams for explaining the advantages of the display device.

Fig. 7 is a plan view of a parallax barrier of the display device.

Fig. 8 is a block diagram showing the entire construction of a display device in accordance with a second embodiment of the invention.

Fig. 9 is a block diagram showing the electrical construction of a display unit and a peripheral driving circuit of the display device.

Fig. 10 is a schematic diagram showing the construction of a cellular phone as an example of an electronic apparatus.

Fig. 11 is a schematic diagram showing the construction of a known display device.

Fig. 12 is a diagram for explaining an image processing method of the display device.

Figs. 13A to 13C are plan views of a combined image combined using the image processing method.

Figs. 14A and 14B are diagrams for explaining the advantages of the display device.

### DESCRIPTION OF EXEMPLARY EMBODIMENTS

Hereinafter, exemplary embodiments of the invention will be described in detail with reference to the accompanying drawings. In the following descriptions, a column direction in a screen (the arrangement direction of data lines) will be referred to as "vertical direction," and a row direction in the screen (the arrangement direction of scanning lines) will be referred to as "horizontal direction." The same constituent elements as those of the known display device shown in Figs. 11 to 14 will be referenced by the same reference numerals, and the detailed descriptions thereof will be omitted.

### First Embodiment

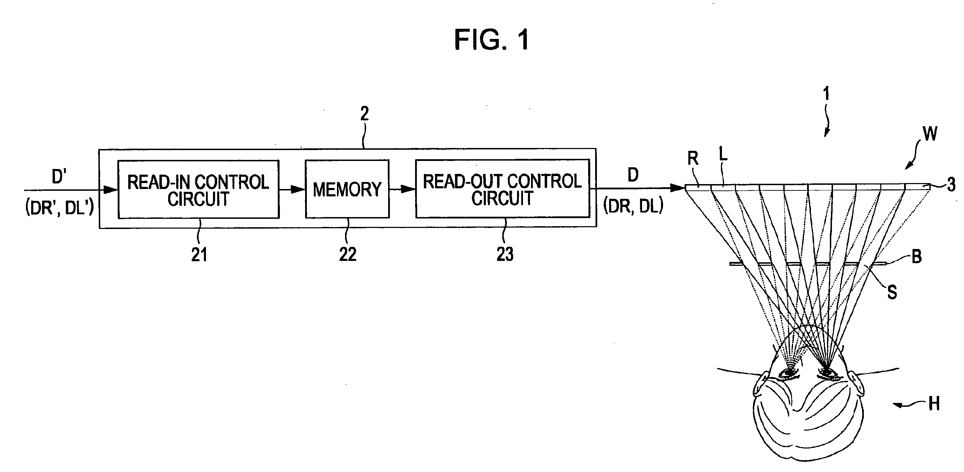

Fig. 1 is a schematic diagram showing the construction of a display device 1 of a first embodiment of the invention. The display device 1 includes an image data combining circuit 2 that combines multiple image data D' including a plurality of image data DR' and DL' into image data D corresponding to one screen; a display panel that displays the image data D supplied from the image data combining circuit 2 on the screen W; and a parallax barrier (image separation member) B that spatially separates the plurality of images R and L displayed on the screen W so as to be guided to the right eye and the left eye of the observer H, respectively.

The multiple image data D' includes the right-eye image data DR' and the left-eye image data DL'. The right-eye image data DR' and the left-eye image data DL' each includes image data corresponding to one screen. The right-eye image data DR' is allocated to the upper half portion of a data area of a predetermined period, and the left-eye image data DL' is allocated to the lower half portion of the data area of the predetermined period. In this way, the multiple image data D' is produced including the image data corresponding to a plurality of screens.

The image data combining circuit 2 includes the read-in control circuit 21 that compresses the multiple image data D' supplied thereto and sequentially stores the compressed image data in the memory 22; and the read-out control circuit 23 that reads out the image data stored in the memory 22 in accordance with a predetermined rule and outputs the image data as the image data D corresponding to one screen. The image data combining circuit 2 filters out portions of the right-eye image data DR' and the left-eye image data DL' included in the multiple image data D' using the read-in control circuit 21, and alternately rearranges the image data DR' and DL' using the memory 22, thereby combining new image data D.

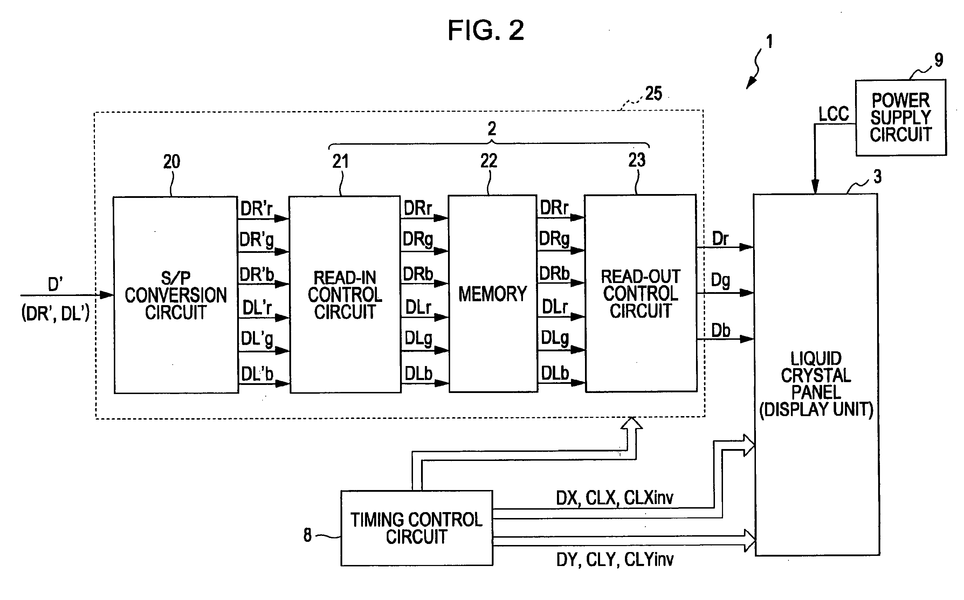

Fig. 2 is a block diagram showing the entire construction of the display device 1. The display device 1 includes a liquid crystal panel 3 serving as the display unit, an image data supply circuit 25, a timing control circuit 8, and a power supply circuit 9.

The timing control circuit 8 is provided with a timing signal generating unit (not shown) that generates dot clocks for scanning pixels (panel pixels) of the liquid crystal panel 3. The timing control circuit 8 generates, based on the dot clocks generated by the timing signal generating unit, a Y clock signal CLY, an inverted Y clock signal CLYinv, an X clock signal CLX, an inverted X clock signal CLXinv, a Y start pulse DY, and an X start pulse DX, and supplies the generated signals and pulses to the image data supply circuit 25 and the liquid crystal panel 3.

The image data supply circuit 25 includes an S/P conversion circuit 20, the read-in control circuit 21, the memory 22, and the read-out control circuit 23. The S/P conversion circuit 20 divides a chain of multiple image data D' serially supplied from an external source into image data components DR'r, DR'g and DR'b for the right-eye image and image data components DL'r, DL'g and DL'b, and outputs the image data components as six-phase-developed image data. The read-in control circuit 21 filters out portions of six image data components DR'r, DR'g, DR'b, DL'r, DL'g and DL'b that were phase-developed by the S/P conversion circuit 20 to produce six new image data components DRr, DRg, DRb, DLr, DLg and DLb, and supplies the new image data components to the memory 22. The read-out control circuit 23 rearranges the image data components DRr, DRg, DRb, DLr, DLg and DLb stored in the memory 22, and outputs image data components Dr, Dg, and Db for the combined image. Image data components designated by "r," "g" and "b" are image data components of red, green, and blue, respectively. The image data components Dr, Dg, and Db respectively are image data components of red, green, and blue for the combined image of the right-eye image and the left-eye image.

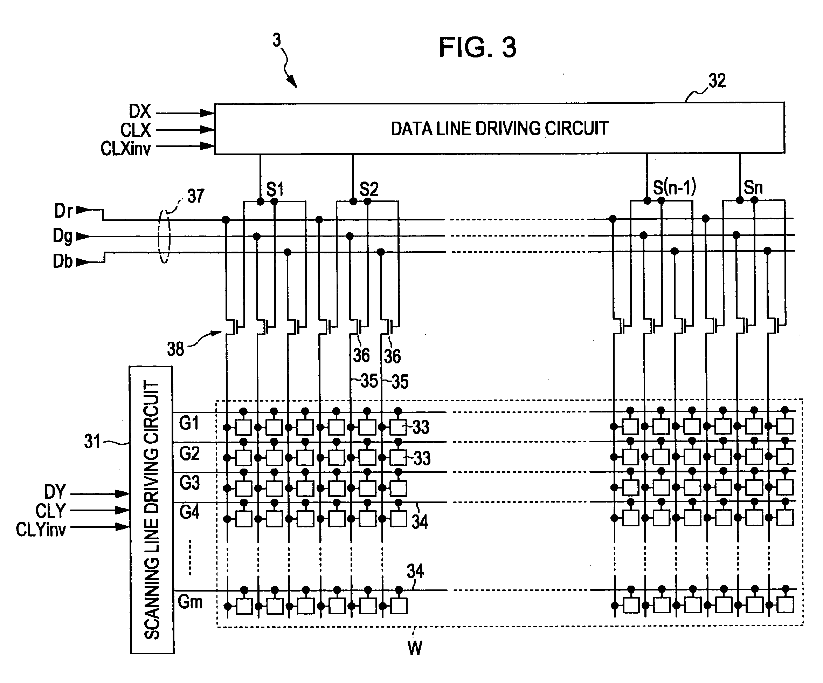

Fig. 3 is a block diagram showing the electrical construction of the liquid crystal panel 3 and a peripheral driving circuit of the display device 1. The liquid crystal panel 3 is provided with an image display area (screen) W for displaying the image data components Dr, Dg, and Db. In the image display area W, a plurality of pixel electrodes 33 are aligned in a matrix arrangement in the horizontal and vertical directions. In the borders of the pixel electrodes 33, a plurality of scanning lines 34 are arranged in the horizontal direction of the image display area W; and a plurality of data lines 35 are arranged in the vertical directions of the image display area W. In addition, TFTs (not shown) serving as pixel switching elements are arranged in the vicinity of intersections of the scanning lines 34 and the data lines 35. The pixel electrodes 33 are electrically connected to the scanning lines 33 and the data lines 35 via the TFTs.

Each formation area of the pixel electrodes 33 constitutes a subpixel. Each subpixel corresponds to any one of color elements red, green, and blue. The whole image display area W is formed by the subpixels arranged in the horizontal and vertical directions. Although not shown in the drawings, a plurality of color filters are arranged as stripes on the image display area W. Each color filter has any one of red, green, and blue colors, and corresponds to any one column of subpixels arranged in the vertical direction. The color filters of red, green, and blue are alternately arranged on a subpixel-by-subpixel basis. One pixel (panel pixel) is constituted by three subpixels corresponding to three color filters of red, green, and blue.

In the peripheral portion of the image display area W, a peripheral driving circuit is provided including a scanning line driving circuit 31, a data line driving circuit 32, and a sampling circuit 38. These circuits may be integrally formed on the substrate of the pixel electrodes 33 and may be separately provided as driving ICs.

Between the data line driving circuit 32 and the sampling circuit 38, three image signal lines 37 are provided for supplying the image data components Dr, Dg, and Db. Each of the three image signal lines 37 corresponds to any one of the three-phase-developed, red-, green- and blue-image data components Dr, Dg, and Db.

One end of each data line 35 is electrically connected to a corresponding one of the sampling switches 36. Each sampling switch 36 is electrically connected to any one of three image signal lines 37 for supplying three-phase image data components Dr, Dg, and Db. The sampling switches 36 are arranged in the horizontal direction, and the sampling circuit 38 is formed by the sampling switches 36.

The scanning line driving circuit 31 receives the Y clock signal CLY, the inverted Y clock signal CLYinv and the Y start pulse DY from the timing control circuit 8 shown in Fig. 2. Upon receiving the Y start pulse DY, the scanning line driving circuit 31 sequentially generates and outputs scanning signals G1, G2, ..., Gm in synchronization with the Y clock signal CLY and the inverted Y clock signal CLYinv.

The data line driving circuit 32 receives the X clock signal CLX, the inverted X clock signal CLXinv and the X start pulse DX from the timing control circuit 8 shown in Fig. 2. Upon receiving the X start pulse DX, the data line driving circuit 32 sequentially generates and outputs sampling signals S1, S2, ..., Sn in synchronization with the X clock signal CLX and the inverted X clock signal CLXinv.

The sampling signals are supplied to each pixel (each panel pixel) as a set of three (red, green, and blue) subpixels that are arranged adjacently in the horizontal direction. The data line driving circuit 32 sequentially supplies the sampling signals S1, S2, ..., Sn to the sampling switches 36 on a pixel-by-pixel basis. The sampling switches 36 are sequentially turned ON in accordance with the sampling signals. The image data components Dr, Dg, and Db are sequentially supplied to the data lines 35 on a pixel-by-pixel basis via the turned ON sampling switches 36.

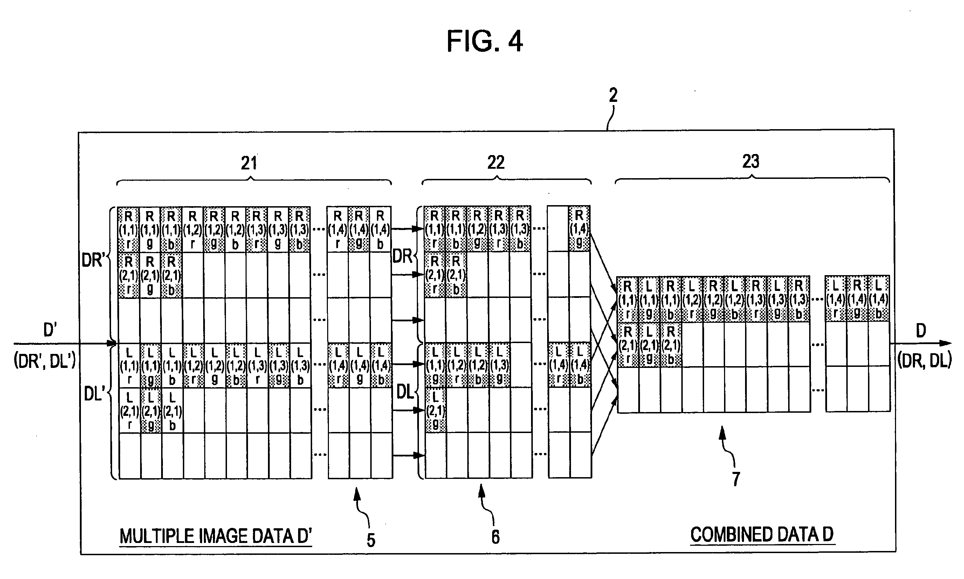

Next, an image processing method of the image data combining circuit 2 will be described with reference to Fig. 4. First, the read-in control circuit 21 reads in the multiple image data D'. The read-in control circuit 21 filters out portions of the right-eye image data DR' and the left-eye image data DL' included in the multiple image data D' and produces new right-eye image data DR and new left-eye image data DL, thereby sequentially supplying the new image data DR and DL to the memory 22.

The multiple image data D' includes the right-eye image data DR' corresponding to one screen as represented by R(1, 1), R(1, 2), and so on; and the left-eye image data DL' corresponding to one screen as represented by L(1, 1), L(1, 2), and so on. In Fig. 4, numeral 5 represents the arrangement of the multiple image data D' corresponding to one screen supplied from an external source; and numeral 6 represents the arrangement of the multiple image data D' in a storage area of the memory 22. Numeral 7 represents the arrangement of the image data (combined data) D corresponding to one screen obtained by selecting and rearranging a portion of the multiple image data D'. The combined data D includes the right-eye image data DR obtained by extracting a portion of the right-eye image data DR'; and the left-eye image data DL obtained by extracting a portion of the left-eye image data DL'. These image data DR and DL are rearranged on a subpixel-by-subpixel basis and are output as the image data components Dr, Dg, and Db of the subpixels of red, green, and blue (see Fig. 2).

In the arrangement diagrams 5 and 7, each rectangular area represents image data of a subpixel. The characters on the upper two lines in each rectangular area represent the type (right-eye or left-eye image) of the image data and the coordinates on the screen W of the pixel including the subpixel. For example, if the upper portion of the rectangular area of the image data is indicated by "R(n, k)" (wherein, n and k are integers), the image data is the right-eye image data of a pixel arranged at the n-th row and k-th column on the screen W. The character on the bottom line in each rectangular area represents the color information of the subpixel. The characters "r," "g," and "b" represent color information of red, green, and blue, respectively. For example, if the bottom line in the rectangular area of the image data is indicated by "m" (wherein, m is r, g or b), the image data is the image data of a subpixel corresponding to a color filter of m color. Hereinafter, the image data of the subpixel will be simply denoted as "R(n, k)m" (wherein, n and k are integers; and m is r, g or b).

First, in the read-in control circuit 21, for the right-eye image data DR', the image data R(1, 1)g of the red subpixel is filtered out from the image data of the pixel at coordinates (1, 1), and the image data R(1, 1)r and R(1, 1)b of the red and blue subpixels, respectively, are stored in the memory 22. The image data R(1, 2)r and R(1, 2)b of the red and blue subpixels, respectively, are filtered out from the image data of the pixel at coordinates (1, 2), and the image data R(1, 2)g of the green subpixel is stored in the memory 22. The image data R(1, 3)g of the green subpixel is filtered out from the image data of the pixel at coordinates (1, 3), and the image data R(1, 3)r and R(1, 3)b of the red and blue subpixels, respectively, are stored in the memory 22.

In this way, for the image data of odd-numbered pixels, the image data having color information of green are filtered out, and the image data having color information of red and blue are stored in the memory 22. For the image data of even-numbered pixels, the image data having color information of red and blue are filtered out, and the image data having color information of green are stored in the memory 22. As a result, new right-eye image data DR having an information amount two times smaller than that of the right-eye image data DR' are stored in the memory 22. The new right-eye image data DR are obtained by selecting a portion of the original right-eye image data DR' having predetermined color information while filtering out the remaining portion of the original right-eye image data DR'. Thus, the information amount of the image data DR is reduced by 50 percent as a whole.

After completing the image processing operation for the right-eye image data DR', the image processing operation for the left-eye image data DL' is performed. In the read-in control circuit 21, for the left-eye image data DL', the image data L(1, 1)r and L(1, 1)b of the red and blue subpixels are filtered out from the image data of the pixel at coordinates (1, 1), and the image data L(1, 1)g of the green subpixel is stored in the memory 22. The image data L(1, 2)g of the green subpixel is filtered out from the image data of the pixel at coordinates (1, 2), and the image data L(1, 2)r and L(1, 2)b of the red and blue subpixels are stored in the memory 22. The image data L(1, 3)r and L(1, 3)b of the red and blue subpixels are filtered out from the image data of the pixel at coordinates (1, 3), and the image data L(1, 3)g of the green subpixel is stored in the memory 22.

In this way, for the image data of odd-numbered pixels, the image data having color information of red and blue are filtered out, and the image data having color information of green are stored in the memory 22. For the image data of even-numbered pixels, the image data having color information of green are filtered out, and the image data having color information of red and blue are stored in the memory 22. As a result, new left-eye image data DL having an information amount two times smaller than that of the left-eye image data DL' are stored in the memory 22. The new left-eye image data DL are obtained by selecting a portion of the original left-eye image data DL' having predetermined color information while filtering out the remaining portion of the original left-eye image data DR'. Thus, the information amount of the image data DL is reduced by 50 percent as a whole.

After the image processing operation, the read-out control circuit 23 reads out the right-eye image data DR and the left-eye image data DL from the memory 22 in accordance with a predetermined rule. The red, green, and blue subpixels included in the pixel at coordinates (1, 1) are supplied with the image data R(1, 1)r, L(1, 1)g, and R(1, 1)b, respectively. The red, green, and blue subpixels included in the pixel at coordinates (1, 2) are supplied with the image data L(1, 2)r, R(1, 2)g, and L(1, 2)b, respectively. In this way, the red, green, and blue subpixels included in the odd-numbered pixels are supplied with the red image data of the right-eye image, the green image data of the left-eye image, and the blue image data of the right-eye image, respectively. The red, green, and blue subpixels included in the even-numbered pixels are supplied with the red image data of the left-eye image, the green image data of the right-eye image, and the blue image data of the left-eye image, respectively. As a result, new image data (combined data) D are produced by combining the right-eye image data DR and the left-eye image data DL with each other.

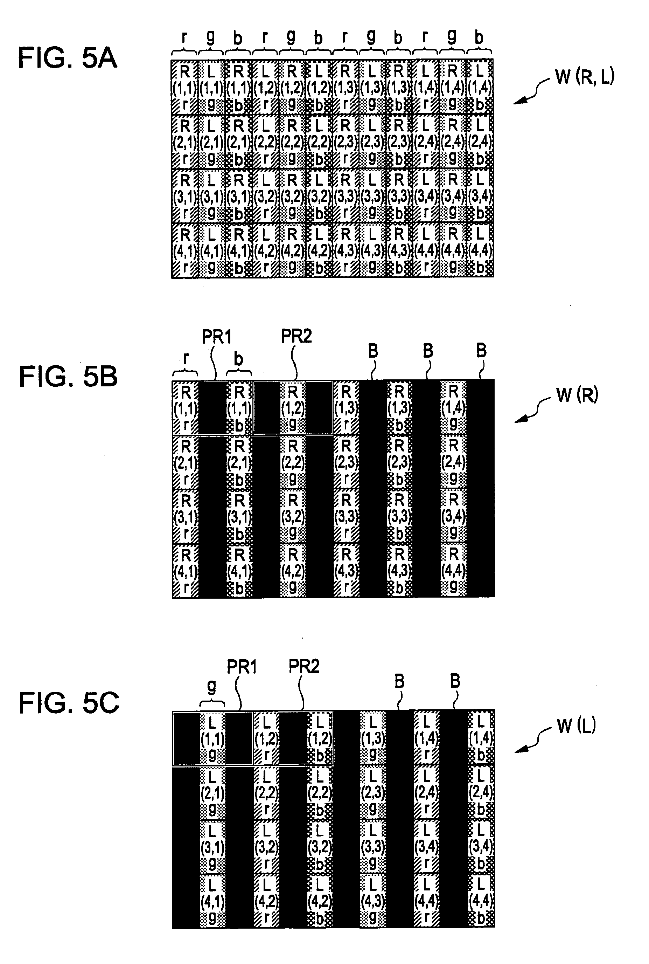

Figs. 5A and 5C show plan views of a part of an image of the combined data D displayed on the screen W. In the drawing, Fig. 5(A) shows a combined image of the left-eye image L and the right-eye image R; Fig. 5(B) shows the right-eye image R as observed through the parallax barrier B; and Fig. 5(C) shows the left-eye image L as observed through the parallax barrier B. In the drawing, the characters "r," "g" and "b" respectively represent subpixels associated with the color filters of red, green, and blue.

As shown in Fig. 5A, the subpixels for displaying the right-eye image R and the subpixels for displaying the left-eye image L are alternately arranged in the horizontal direction on a subpixel-by-subpixel basis. As viewed from the vertical direction, a plurality of subpixels for displaying the right-eye image R and a plurality of subpixels for displaying the left-eye image L are alternately arranged on a column-by-column basis (i.e., on a subpixel-by-subpixel basis). That is, the plurality of subpixels for displaying images R and L are arranged in the arrangement direction of the color filters (in the vertical direction) in stripes.

In Fig. 5B, a set of one or two subpixels represented by the same coordinates (n, k) constitutes one display pixel PR1 or PR2 for the right-eye image R. That is, in the case of the display pixel PR1 disposed in the upper left side of the drawing, one display pixel is composed of two (red and blue) subpixels among three subpixels that are arranged adjacently in the horizontal direction. In the case of the display pixel PR2 disposed next to the display pixel PR1 in the horizontal direction, one display pixel is composed of one (green) subpixel among three subpixels that are arranged adjacently in the horizontal direction. Each display pixel PR1 and PR2 is a minimum display unit for displaying a post-combined right-eye image R, and is different from the pixel (panel pixel) constituting the screen W. That is, each display pixel PR1 and PR2 is different from the pixel composed of a set of three (red, green, and blue) subpixels that are arranged adjacently in the horizontal direction. On the screen W, a plurality of display pixels PR1 and PR2 for the right eye (right-eye display pixel) are arranged in the horizontal and vertical directions. The plurality of right-eye display pixels PR1 and PR2 form the whole right-eye image R.

In Fig. 5C, a set of one or two subpixels represented by the same coordinates (n, k) constitutes one display pixel PL1 or PL2 for the left-eye image L. That is, in the case of the display pixel PL1 disposed in the upper left side of the drawing, one display pixel is composed of one (green) subpixel among three subpixels that are arranged adjacently in the horizontal direction. In the case of the display pixel PL2 disposed next to the display pixel PL1 in the horizontal direction, one display pixel is composed of two (red and blue) subpixels among three subpixels that are arranged adjacently in the horizontal direction. Each display pixel PL1 and PL2 is a minimum display unit for displaying a post-combined left-eye image L, and is different from the pixel (panel pixel) constituting the screen W. That is, each display pixel PL1 and PL2 is different from the pixel composed of a set of three (red, green, and blue) subpixels that are arranged adjacently in the horizontal direction. On the screen W, a plurality of display pixels PL1 and PL2 for the left eye (left-eye display pixel) are arranged in the horizontal and vertical directions. The plurality of left-eye display pixels PL1 and PL2 form the whole left-eye image L.

In the present embodiment, the display pixel PR1 is constructed such that the green subpixel is omitted from the display pixel PR shown in Fig. 13B. For this reason, the display pixel is colored purple as a whole. Meanwhile, the display pixel PR2 is constructed such that the red and blue subpixels are omitted from the display pixel PR shown in Fig. 13B. For this reason, the display pixel is colored green as a whole. However, since the display pixels PR1 and PR2 are adjacent to each other, color compensation is realized between the display pixels. Thus, it is possible to negate the color difference in a resulting image as a whole. Moreover, since a portion of color information is omitted from the individual display pixels PR1 and PR2, it is difficult to obtain absolutely accurate color reproducibility. Since in many cases similar images are displayed by the adjacent display pixels, color compensation is realized between the adjacent display pixels. Thus, it is possible to obtain relatively accurate color reproducibility. The size of the individual display pixels PR1 and PR2 is equal to that of the pixels (panel pixels) required for displaying the two-dimensional image. Thus, the resolution is not reduced even at the time of displaying a fine image. Accordingly, the right-eye image R formed by the display pixels PR1 and PR2 becomes one having high color reproducibility and a smooth border.

The above statements can be similarly applied to the case of the left-eye image L shown in Fig. 5C. That is, the display pixel PL1 is constructed such that the red and blue subpixels are omitted from the display pixel PL shown in Fig. 13C. For this reason, the display pixel is colored green as a whole. Meanwhile, the display pixel PL2 is constructed such that the green subpixel is omitted from the display pixel PL shown in Fig. 13C. For this reason, the display pixel is colored purple as a whole. However, since the display pixels PL1 and PL2 are adjacent to each other, color compensation is realized between the display pixels. Thus, it is possible to negate the color difference in a resulting image as a whole. Moreover, since a portion of color information is omitted from the individual display pixels PL1 and PL2, it is difficult to obtain absolutely accurate color reproducibility. Since in many cases similar images are displayed by the adjacent display pixels, color compensation is realized between the adjacent display pixels. Thus, it is possible to obtain relatively accurate color reproducibility. The size of the individual display pixels PL1 and PL2 is equal to that of the pixels (panel pixels) required for displaying the two-dimensional image. Thus, the resolution is not reduced even at the time of displaying a fine image. Accordingly, the left-eye image L formed by the display pixels PL1 and PL2 becomes one having high color reproducibility and a smooth border.

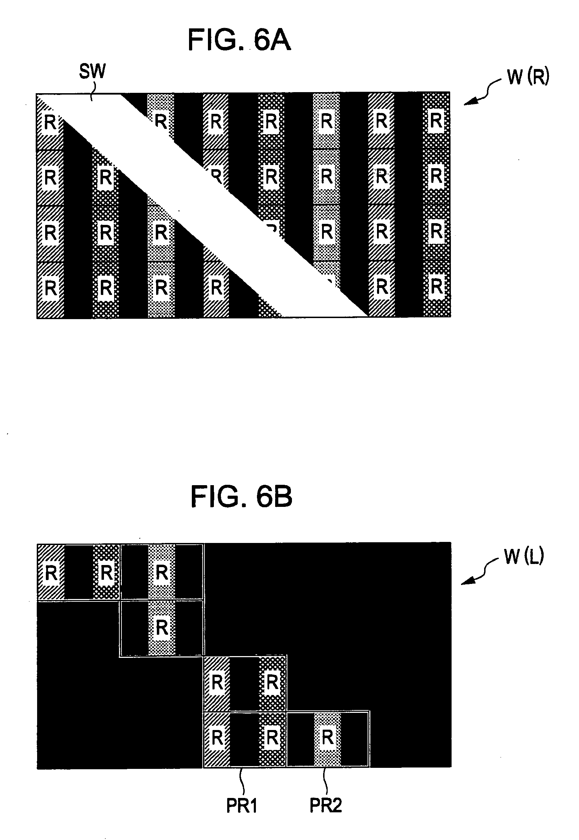

Figs. 6A and 6B show the case where a white bright line SW is displayed on the screen W. As shown in Fig. 6A, when the bright line SW is displayed on the right-eye image R, it is necessary to illuminate the display pixels PR1 and PR2 overlapped by the bright line SW (Fig. 6B). In this case, since the size of the display pixels PR1 and PR2 is equal to that of the pixels (panel pixels) required for displaying the two-dimensional image, the width of the bright line SW is not increased in the horizontal direction. Accordingly, it is possible to reproduce the original shape of the bright line SW in a relatively accurate manner.

As described above, according to the display device 1 of the present embodiment, since the size of the display pixels PR1, PR2, PL1, and PL2 for displaying a combined image is equal to that of the pixels (panel pixels) required for displaying the two-dimensional image, it is possible to display an image having a high resolution. In this case, although it is difficult to obtain absolutely accurate color reproducibility in the individual display pixels, the displayed colors are different from each other between the adjacent display pixels (between display pixels PR1 and PR2 or between display pixels PL1 and PL2). Therefore, color compensation is realized between the adjacent display pixels. Thus, it is possible to obtain accurate color reproducibility as a whole.

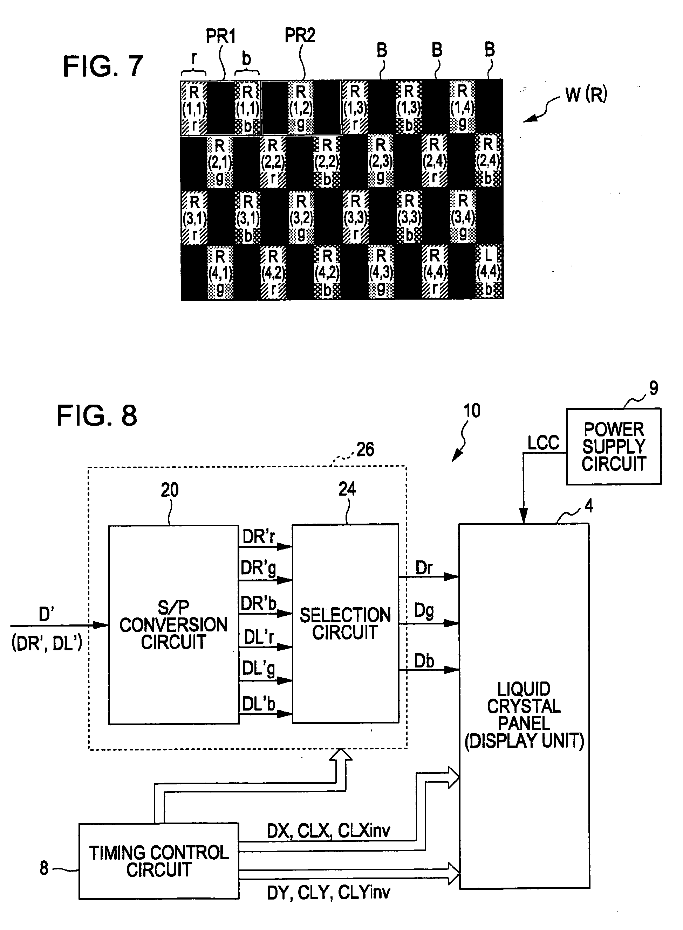

In the present embodiment, the stripe barrier method is used in which the parallax barrier B is disposed in the vertical direction. However, the invention may be applied to the oblique barrier method (step barrier method) in which the parallax barrier B is obliquely arranged in the horizontal direction. Fig. 7 is a plan view of the screen W when the step barrier method is used, which corresponds to Fig. 5A showing the right-eye image R as observed through the parallax barrier B. In the drawing, the display pixels PR1 at coordinates (2, 2) have color information of red and blue; and four adjacent display pixels surrounding the display pixel PR1, i.e., the display pixels at coordinates (1, 2), (2, 1), (3, 2), and (2, 3) have color information of green. Therefore, in the case of the step barrier method, unlike the stripe barrier method, color compensation is realized between the display pixels arranged adjacent to each other in both the horizontal and vertical directions. Accordingly, it is possible to obtain a high-quality image without deteriorating the color reproducibility.

In the present embodiment, a stereoscopic display device for displaying a stereoscopic image is described. However, the invention may be applied to a multi-viewpoint display device for presenting a multi-viewpoint image to a plurality of observers. In the case of the stereoscopic display device, the right-eye image data DR' and the left-eye image data DL' are prepared as the image data for display, and the right-eye image R and the left-eye image L are spatially separated using the image separating unit (parallax barrier, for example). In the case of the multi-viewpoint display device, multi-viewpoint image data are prepared as the image data for display, and images of different viewpoints are spatially separated using the image separating unit (parallax barrier, for example). For example, in the case of a display device for an on-vehicle navigation system, an image of a first viewpoint (driver's seat side) and an image of a second viewpoint (passenger's seat side) are prepared as a navigation image and a television image, respectively, and the navigation image and the television image are presented to the corresponding observers (driver and passenger) using the image separating unit. In the case of the stereoscopic display device, the arrangement relationship between the panel pixel and the apertures of the parallax barrier is determined on the basis of the position of the right and left eyes. In the case of the multi-viewpoint display device, the arrangement relationship between the panel pixel and the apertures of the parallax barrier is determined on the basis of the position of the observers.

In the present embodiment, the liquid crystal panel is used as the display unit 3. Instead of the liquid crystal panel, other display panels may be used as the display unit. As display panels, a non-emission-type panel such as a liquid crystal panel or an electrophoresis panel and a self-emission-type panel such as an electroluminescence (EL) panel are usable. Moreover, the parallax barrier B is used as the image separating unit. Instead of the parallax barrier, lenticular lenses may be used as the image separating unit.

In the present embodiment, one display pixel is composed of a pixel in which a portion of color information is omitted. In the case of displaying one white line in the vertical direction, a purple or green line may flicker on the screen. In this case, it is desirable to display the white line by simultaneously illuminating adjacent display pixels.

### Second Embodiment

Fig. 8 is a block diagram showing the entire construction of a display device 10 in accordance with a second embodiment of the invention. The display device 10 includes a liquid crystal panel 4 serving as the display unit, an image data supply circuit 26, a timing control circuit 8, and a power supply circuit 9. The same constituent elements as those of the display device 1 of the first embodiment will be referenced by the same reference numerals, and the detailed descriptions thereof will be omitted.

The image data supply circuit 26 includes an S/P conversion circuit 20 and a selection circuit 24. The selection circuit 24 selects portions of six image data components DR'r, DR'g, DR'b, DL'r, DL'g and DL'b that were phase-developed by the S/P conversion circuit 20 and supplies them to the liquid crystal panel 4. On the liquid crystal panel 4, a combined image is displayed that is formed by the image data components Dr, Dg, and Db selected by the selection circuit 24. The image data components Dr, Dg, and Db respectively are image data components of red, green, and blue for the combined image.

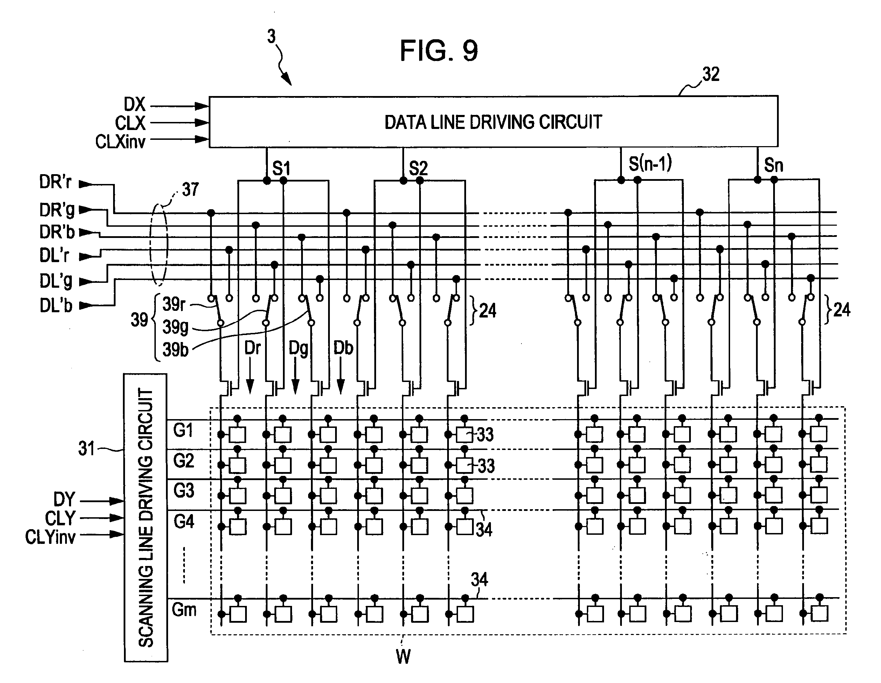

Fig. 9 is a block diagram showing the electrical construction of the liquid crystal panel 4 and a peripheral driving circuit of the display device 1. The liquid crystal panel 4 is provided with an image display area (screen) W for displaying the image data components Dr, Dg, and Db. In the image display area W, a plurality of pixel electrodes 33 are aligned in a matrix arrangement in the horizontal and vertical directions. In the borders of the pixel electrodes 33, a plurality of scanning lines 34 are arranged in the horizontal direction of the image display area W; and a plurality of data lines 35 are arranged in the vertical directions of the image display area W. In addition, TFTs (not shown) serving as pixel switching elements are arranged in the vicinity of intersections of the scanning lines 34 and the data lines 35. The pixel electrodes 33 are electrically connected to the scanning lines 33 and the data lines 35 via the TFTs.

Each formation area of the pixel electrodes 33 constitutes a subpixel. Each subpixel corresponds to any one of color elements red, green, and blue. The whole image display area W is formed by the subpixels arranged in the horizontal and vertical directions. Although not shown in the drawings, a plurality of color filters are arranged as stripes on the image display area W. Each color filter has any one of red, green, and blue colors, and corresponds to any one column of subpixels arranged in the vertical direction. The color filters of red, green, and blue are alternately arranged on a subpixel-by-subpixel basis. One pixel (panel pixel) is constituted by three subpixels corresponding to three color filters of red, green, and blue.

In the peripheral portion of the image display area W, a peripheral driving circuit is provided including a scanning line driving circuit 31, a data line driving circuit 32, and a sampling circuit 38. These circuits may be integrally formed on the substrate of the pixel electrodes 33 and may be separately provided as driving ICs.

Between the data line driving circuit 32 and the sampling circuit 38, six image signal lines 37 are provided for supplying the image data components DR'r, DR'g, DR'b, DL'r, DL'g, and DL'b. Each of the six image signal lines 37 corresponds to any one of the right-eye red-image data component DR'r, the right-eye green-image data component DR'g, the right-eye blue-image data component DR'b, the left-eye red-image data component DL'r, the left-eye green-image data component DL'g, and the left-eye blue-image data component DR'b, in which the image data components are developed into six phases.

One end of each data line 35 is electrically connected to a corresponding one of the sampling switches 36. Each sampling switch 36 corresponds to two image signal lines for supplying the right-eye image data and the left-eye image data. Between the sampling switches 36 and the image signal lines 37, selection switching elements 39 (39r, 39g, and 39b) are provided for selecting one of two image signal lines 37.

Specifically, the sampling switches 36 connected to the data lines 35 for supplying the red-image data components are connected to the image signal line 37 for supplying the right-eye red-image data component DR'r and to the image signal line 37 for supplying the left-eye red-image data component DL'r. Between the two data signal lines 37 and one sampling switch 36, a switching element 39r (for red) is provided for selecting one of the image signal lines 37.

The sampling switches 36 connected to the data lines 35 for supplying the green-image data components are connected to the image signal line 37 for supplying the right-eye green-image data component DR'g and to the image signal line 37 for supplying the left-eye green-image data component DL'g. Between the two data signal lines 37 and one sampling switch 36, a switching element 39g (for green) is provided for selecting one of the image signal lines 37.

The sampling switches 36 connected to the data lines 35 for supplying the blue-image data components are connected to the image signal line 37 for supplying the right-eye blue-image data component DR'b and to the image signal line 37 for supplying the left-eye blue-image data component DL'b. Between the two data signal lines 37 and one sampling switch 36, a blue switching element 39b (for blue) is provided for selecting one of the image signal lines 37.

The selection switching elements 39 are arranged in the horizontal direction, and the selection circuit 24 is formed by the selection switching elements 39. The selection circuit 24 selects the image data of the subpixels selected as the display pixel of the right-eye image and the image data of the subpixels selected as the display pixel of the left-eye image, respectively from pre-combined image data DR'r, DR'g, and DR'b for the right-eye image supplied from an external source and pre-combined image data DL'r, DL'g, DL'b for the left-eye image supplied from the external source, and outputs the image data for the right-eye and left-eye images to a corresponding one of the subpixels.

The scanning line driving circuit 31 receives the Y clock signal CLY, the inverted Y clock signal CLYinv and the Y start pulse DY from the timing control circuit 8 shown in Fig. 8. Upon receiving the Y start pulse DY, the scanning line driving circuit 31 sequentially generates and outputs scanning signals G1, G2, ..., Gm in synchronization with the Y clock signal CLY and the inverted Y clock signal CLYinv.

The data line driving circuit 32 receives the X clock signal CLX, the inverted X clock signal CLXinv and the X start pulse DX from the timing control circuit 8 shown in Fig. 8. Upon receiving the X start pulse DX, the data line driving circuit 32 sequentially generates and outputs sampling signals S1, S2, ..., Sn in synchronization with the X clock signal CLX and the inverted X clock signal CLXinv.

The sampling signals are supplied to each pixel (each panel pixel) as a set of three (red, green, and blue) subpixels that are arranged adjacently in the horizontal direction. The data line driving circuit 32 sequentially supplies the sampling signals S1, S2, ..., Sn to the sampling switches 36 on a pixel-by-pixel basis. The sampling switches 36 are sequentially turned ON in accordance with the sampling signals. The image data components Dr, Dg, and Db are sequentially supplied to the data lines 35 on a pixel-by-pixel basis via the turned ON sampling switches 36.

In the selection circuit 24, in synchronization with turning-ONs of the sampling switches 36, the selection switching element 39 selects one of two image signal lines 37. As viewed from the horizontal direction, the selection switching element 39 alternately selects the right-eye image data and the left-eye image data on a column-by-column basis (on a subpixel-by-subpixel basis). For this reason, the image data not selected by the selection switching element 39 are filtered out, and thus the information amount is reduced by 50 percent.

Among the right-eye image data and the left-eye image data corresponding to one pixel, the right-eye image data and the left-eye image data selected by the selection switching elements 39 are output to the area of the liquid crystal panel corresponding to one pixel (one panel pixel). The size of the display pixel, which is a minimum display unit of the right-eye image and the left-eye image, becomes equal to that of one pixel (one panel pixel) of the liquid crystal panel 4. Since the color information items for display are different from each other between adjacent display pixels, color compensation is realized between the adjacent display pixels. Thus, it is possible to obtain relatively accurate color reproducibility.

As described above, according to the display device 10 of the present embodiment, the same combined image is obtained as that obtained by the display device 1 of the first embodiment. In the combined image, the size of the display pixel, which is a minimum display unit of the right-eye image and the left-eye image, is equal to that of one pixel (one panel pixel) of the liquid crystal panel 4. Accordingly, it is possible to display an image having a high resolution and a smooth border compared with the known display device. Moreover, since the displayed colors are different from each other between adjacent display pixels, color compensation is realized between the adjacent display pixels. Thus, it is possible to obtain relatively accurate color reproducibility. Moreover, unlike the display device 1 of the first embodiment, since the memory is not required, it is possible to provide a display device at low cost.

### Electronic Apparatus

Fig. 10 is a perspective view showing an example of the electronic apparatus of the invention. The cellular phone 1300 includes a plurality of operation buttons 1302, an earpiece 1303, a mouthpiece 1304, and a display unit 1301 to which the display device of the invention is applied. As electronic apparatuses to which the display device of the above embodiments is applied, there are an electronic book, a personal computer, a digital still camera, a liquid crystal TV, a view-finder-type (or monitor-direct-view-type) video tape recorder, a car navigation device, a pager, an electronic organizer, a calculator, a word processor, a workstation, a video phone, a POS terminal, an apparatus equipped with a touch panel, other than the cellular phone. Accordingly, it is possible to provide an electronic apparatus capable of displaying an image having a clear and smooth border.

Although the exemplary embodiments of the invention have been described with reference to the accompanying drawings, it should be understood that the invention is not limited to such embodiments. Various shapes or combinations of respective constituent elements illustrated in the above-described embodiments are merely examples, and various changes may be made depending on design requirements or the like without departing from the spirit or scope of the invention.

## Claims

1. A display device, comprising:
pixels including a plurality of subpixels of different colors;
a display unit in which the pixels are arranged in horizontal and vertical directions;
an image data combining circuit that combines image data for a first image to be displayed on the display unit and image data for a second image to be displayed on the display unit with each other; and
an image separation member that spatially separates the first image and the second image displayed on the display unit from each other,
wherein the first image includes, as a display pixel which is a minimum display unit of an image, one or more subpixels selected from the plurality of subpixels included in one pixel, and
wherein the second image includes, as a display pixel which is a minimum display unit of an image, one or more subpixels other than the one or more subpixels selected for the first image among the plurality of subpixels included in the one pixel.

2. The display device according to Claim 1, wherein colors of adjacent subpixels, selected as the display pixel, in one image are different from each other.

3. The display device according to Claim 1 or Claim 2,
wherein, in one pixel, a total of the number of subpixels selected as the display pixel for the first image and the number of subpixels selected as the display pixel for the second image is equal to the number of subpixels included in the one pixel.

4. The display device according to any one of preceding Claims 1-3, wherein the image data combining circuit includes:
a read-in control circuit that selectively reads, into a memory, image data of the subpixels selected as the display pixel of the first image and image data of the subpixels selected as the display pixel of the second image from pre-combined image data for the first image supplied from an external source and pre-combined image data for the second image supplied from the external source, respectively; and
a read-out control circuit that outputs the image data read into the memory to a corresponding one of the subpixels in one pixel via image signal lines.

5. The display device according to any one of preceding Claims 1-4, wherein the image data combining circuit includes:
a selection circuit that selects image data of the subpixels selected as the display pixel of the first image and image data of the subpixels selected as the display pixel of the second image from pre-combined image data for the first image supplied from an external source and pre-combined image data for the second image supplied from the external source, respectively, and outputs the image data for the first and second images to a corresponding one of the subpixels.

6. The display device according to Claim 5,
wherein the selection circuit includes a plurality of selection switching elements arranged in a horizontal direction,
wherein the plurality of selection switching elements are connected to the plurality of subpixels arranged in horizontal and vertical directions, and
wherein each selection switching element is connected to two image signal lines so that the pre-combined image data for the first and second images are supplied to a corresponding subpixel, that is electrically connected to the selection switching element, via a corresponding one of the image signal lines.

7. The display device according to Claim 6, wherein the selection switching elements corresponding to the subpixels of a common color are configured to select the image data so that the image data of adjacent subpixels represent different images.

8. The display device according to any one of preceding Claims 1-7, wherein the subpixels selected as the display pixel for the first image and the subpixels selected as the display pixel for the second image are alternately arranged in at least one of the horizontal and vertical directions.

9. The display device according to Claim 8, wherein the subpixels selected as the display pixel for the first image and the subpixels selected as the display pixel for the second image are alternately arranged in both the horizontal and vertical direction.

10. The display device according to any one of preceding Claims 1-9, wherein the first image is an image for the right eye, and the second image is an image for the left eye.

11. The display device according to any one of preceding Claims 1-10, wherein the first image is a first-viewpoint image observed from a first viewpoint, and the second image is a second-viewpoint image observed from a second viewpoint.

12. An image processing method in which a first image and a second image are combined with each other and displayed on one screen, the method comprising:
constructing, as a display pixel which is a minimum display unit of the first image, one or more subpixels selected from a plurality of subpixels included in one pixel; and
constructing, as a display pixel which is a minimum display unit of the second image, one or more subpixels other than the one or more subpixels selected for the first image among the plurality of subpixels included in the one pixel.

13. An electronic apparatus comprising the display device according to any one of preceding Claims 1-11.
